# EUROPÄISCHE PATENTSCHRIFT

(11) **EP 2 581 920 B1**
(45) Veröffentlichungstag und Bekanntmachung des Hinweises auf die Patenterteilung: **28.11.2018**
(21) Anmeldenummer: 12007115.4
(22) Anmeldetag: 11.10.2012
(51) Int. Cl.: H01F 7/126, H01F 7/127, H01F 7/128

(54) **Elektromagnet**
Electromagnet
Electroaimant

(30) Priorität: 14.10.2011 DE 102011115898
(43) Veröffentlichungstag der Anmeldung: 17.04.2013
(73) Patentinhaber: Firma SVM Schultz Verwaltungs-GmbH & Co. KG, 87700 Memmingen (DE)
(72) Erfinder: Hasel, Claus Peter, 87700 Memmingen-Eisenburg (DE); Schönmetzler, Bernhard, 87730 Bad Grönenbach (DE)
(74) Vertreter: Schulz, Manfred

(56) Entgegenhaltungen:
- EP-A2- 2 296 155
- WO-A1-2008/028802
- DE-A1- 10 238 840
- DE-A1-102008 030 454

## Beschreibung

Die Erfindung betrifft einen Elektromagneten, insbesondere für mediensteuernde Ventile, bei welchem in einem Ankerraum ein beweglich gelagerter, auf einen Stößel wirkender Anker und eine Wicklungen eines stromdurchfließbaren Drahtes tragende Spule vorgesehen ist und der den Ankerraum begrenzende Magnetkern eine Stößelbohrung aufweist, welche den axial bewegbaren Stößel aufnimmt und ein, zumindest teilweise aus elastischem Material bestehendes medien- bzw. flüssigkeitsdichtes Abgrenzungselement zwischen dem Stößel und dem Magnetkern vorgesehen ist.

Ein solcher Elektromagnet ist zum Beispiel aus DE 10 2008 030 454 A1 bekannt.

Im Stand der Technik sind gattungsgemäße Elektromagnete zum Beispiel für die Betätigung von Ventilen hinlänglich bekannt. Der Einsatzbereich der Ventile ist oftmals sehr unterschiedlich. Sie werden zum Beispiel auch dazu eingesetzt, aggressive Medienströme (flüssig oder gasförmig) zu steuern. Oftmals ist es dabei unerwünscht, dass das aggressive Medium (zum Beispiel Verschmutzung in dem Medium, veränderte Viskosität, das zu schaltende Medium ist chemisch unverträglich mit dem Magnetmaterial, löst dieses zum Beispiel auf) in den Ankerraum gelangt. Es ist daher bekannt, den Ankerraum mit einer definierten Flüssigkeit zu füllen und zwischen dem Ankerraum und dem Ventilraum an geeigneter Stelle ein Abgrenzungselement vorzusehen. Im Stand der Technik wird als Abgrenzungselement eine Trennmembrane eingesetzt. Durch das Füllen des Ankerraumes mit einer Ankerraumflüssigkeit ist die Membrane druckausgeglichen und die unter Umständen erhebliche Druckbelastung des Elektromagneten (diese kann zum Beispiel bei hydraulischen Anwendungsfällen bis zu 200 bar und mehr betragen) hat keinen Einfluss auf die Druckfestigkeit des Elektromagneten.

Bei den bekannten Lösungen wird die im Wesentlichen, scheibenförmige Trennmembrane einerseits am Stößel und radial außenliegend am Magnetkern, besonders in der Stößelbohrung befestigt. Die Stößelbewegung, die einerseits durch den elektromagnetischen Effekt hervorgerufen wird (die von elektrischem Strom durchflossenen Drahtwicklungen der Spule erzeugen ein Magnetfeld, welches den Anker im Ankerraum bewegt und diese Bewegung wird auf den Stößel übertragen, bzw. die Rückstellbewegung erfolgt zum Beispiel durch eine Umpolung des Elektromagneten oder aber durch geeignete mechanische Elemente, zum Beispiel eine Rückstellfeder oder ähnliches) ist dabei im Wesentlichen rechtwinklig zur flächigen, scheibenartigen Anordnung der Trennmembrane. Der mit dem Anker bzw. dem Stößel hervorgerufene Hub von einigen wenigen Zehntel Millimetern, Millimetern oder bis zu 5-8 Millimetern muss dann in geeigneter Weise von der Trennmembrane mit ausgeführt werden, was zu einer entsprechenden mechanischen Belastung der Trennmembrane führt. Die bekannten Trennmembrane bestehen aus einem elastischen Material, wobei beobachtet wird, dass sich die maximale Verformung im Bereich des kleinsten Radius bzw. kleinsten Querschnittes in der Trennmembrane ausbilden, das heißt, die Trennmembrane ist insbesondere im Befestigungsbereich am Stößel durch eine scharnierartige Bewegung erheblich belastet. Des Weiteren ist zu beachten, dass die Stößelbewegung von der Ankerbewegung abgeleitet ist (der Stößel ist zum Beispiel fest mit dem Anker verbunden oder aber mit entsprechenden Rückstellelementen schwimmend auf ihm gelagert) und das Austauchen des Stößels aus dem Elektromagnetinneren führt dazu, dass ein Volumenausgleich im Ankerraum und der mit dem Ankerraum notwendigerweise verbundenen Stößelbohrung erfolgt. Diese relative Volumenänderung ist von dem Abgrenzungselement entsprechend zu kompensieren und führt zu einer Ausgleichsbewegung der Trennmembrane. Bei den bekannten Anordnungen ist die Ankerbewegung und die Ausgleichsbewegung der Trennmembrane gegenläufig. Das führt dazu, dass eine erhebliche zusätzliche mechanische Belastung der Trennmembrane durch Scherkräfte besteht, was zu einer signifikanten Verringerung der Lebensdauer einerseits oder einer Einschränkung des möglichen Hubes andererseits führt.

Ausgehend von diesem Stand der Technik hat es sich die vorliegende Erfindung zur Aufgabe gemacht, zumindest einen der vorgenannten Nachteile zu überwinden.

Zur Lösung der erfindungsgemäßen Aufgabe geht die Erfindung aus von einem Elektromagneten wie eingangs beschrieben und schlägt vor, dass das Abgrenzungselement einen Befestigungsbereich für eine dichte Verbindung des Abgrenzungselementes mit dem Stößel, ein Anschlussbereich für einen dichten Anschluss des Abgrenzungselementes mit dem Magnetkern und ein zwischen dem Befestigungsbereich und dem Anschlussbereich vorgesehenes Mittelteil umfasst und das Mittelteil zumindest eine Teillänge des Stößels schlauch- oder hülsenartig umgibt.

Im Gegensatz zu der im Stand der Technik bekannten, im Wesentlichen planar ausgebildeten Trennmembrane als Abgrenzungselement wird jetzt bei der erfindungsgemäßen Lösung eine erheblich modifizierte Ausgestaltung des Abgrenzungselementes vorgeschlagen. Der Pfiff der Erfindung liegt darin, dass in dem Abgrenzungselement ein Mittelteil vorgesehen ist, welches zumindest eine Teillänge des Stößels schlauch- und hülsenartig umgibt. Geschickter Weise ist das gesamte Abgrenzungselement aus einem Elastomer einstückig hergestellt, ohne aber die Erfindung hierauf zu beschränken. Der Mittelteil erstreckt sich im Wesentlichen parallel zum Stößel und erfährt eine entsprechende mechanische Beanspruchung, wenn der Stößel bewegt wird. Ein wesentlicher Vorteil der Erfindung liegt insbesondere darin, dass durch die Länge des Mittelteils die relative Beanspruchung des Abgrenzungselementes beeinflussbar ist oder aber der Hub des erfindungsgemäßen Elektromagneten durch Verlängerung des Mittelteils vergrößert werden kann. Bei dem verhältnismäßig langen Mittelteil verteilt sich die zu kompensierende Lageänderung des Stößels (sein Hub) auf einen größeren Bereich mit der Folge einer geringeren mechanischen Belastung des Elastomeres im Mittelteil. Dieser Umstand kann natürlich dazu ausgenutzt werden, auch Elektromagnete mit relativ großen Hüben zu realisieren, die in aggressiven Medien eingesetzt werden und wobei der Ankerraum nicht mit diesen Medien beaufschlagt werden soll.

Die Ausgleichsbewegung der Membrane erfolgt nun auch nicht mehr scharnierartig und mit entsprechender Belastung des kleinsten Durchmessers - also des Befestigungsbereiches des Abgrenzungselementes am Stößel - sondern bevorzugt im Wesentlichen im Mittelteil, in welchem hierfür auch entsprechend mehr elastisches Material zur Verfügung steht. Es ergibt sich mit dem erfindungsgemäßen Vorschlag, dass die auf das Abgrenzungselement wirkenden Bewegungsanteile bei der Anker- bzw. Stößelbewegung einerseits und der Volumenausgleichsbewegung andererseits gleichförmig sind. Eine elastische Verformung erfolgt in dem schlauch- bzw. hülsenartigen Mittelteil des Abgrenzungselementes, wobei bei einer Dehnung dieses schlauch- oder hülsenartigen Mittelteils sich der Durchmesser des Mittelteils verringert, also das Mittelteil enger an dem Stößel anliegt. Bei dieser Bewegung taucht ein Teil des Stößels aus der Stößelbohrung aus, die Summe der mit Ankerraumflüssigkeit ausfüllbaren Volumina von Ankerraum und Stößelbohrung würde sich bei gleichbleibendem Volumen der Ankerraumflüssigkeit vergrößern, was durch das engere Anliegen des Mittelteils ausgeglichen wird.

Die Ausgleichsbewegung, die bei der erfindungsgemäßen Variante auftritt ist aber nicht gegenläufig zur Ankerbewegung und führt nicht zu einer zusätzlichen mechanischen Belastung des Abgrenzungselementes. Die elastische Verformung wird weitgehend gleichmäßig auf den schlauch- bzw. hülsenartigen Mittelteil des Abgrenzungselementes verteilt. Hierdurch wird die Lebensdauer erheblich gesteigert, da die konstruktiven Schwachpunkte bei den Lösungen nach dem Stand der Technik vollständig vermieden werden und gleichzeitig mit dem erfindungsgemäßen Elektromagneten bei gleichen Rahmenbedingungen schnellere Schaltzeiten erreichbar sind. Die zu überwindenden Widerstände sind zudem deutlich geringer. Auch die Dauerhaftigkeit des erfindungsgemäßen Vorschlags ist erheblich verbessert, mit dem erfindungsgemäßen Elektromagneten werden deutlich höhere Schaltzahlen erreicht.

In einer bevorzugten Ausgestaltung der Erfindung ist vorgesehen, dass das Mittelteil im Wesentlichen parallel bzw. koaxial zum Stößel angeordnet ist. Eine solche Ausrichtung gestattet es, dass die Materialbeanspruchung im Mittelteil möglichst gering ist und keine Scherkräfte usw. auftreten, die bei den Lösungen im Stand der Technik für eine deutliche Reduzierung der Lebensdauer verantwortlich sind. Aufgrund der schlauch- bzw. hülsenartigen Ausgestaltung des Mittelteils sind auch der Befestigungsbereich sowie der Anschlussbereich axial - bezogen auf die Längserstreckung des Stößels bzw. seiner Bewegungsrichtung - versetzt und der für die magnetische Führung vorgesehene Magnetkern nimmt in platzsparender Weise zum Beispiel im Inneren den Anschlussbereich des Abgrenzungselementes für Befestigungszwecke auf.

In einer vorteilhaften Ausgestaltung des Vorschlages ist vorgesehen, dass das Mittelteil eine Länge von mindestens einem, bevorzugt mindestens zwei, insbesondere drei Stößeldurchmessern aufweist. In gleicher Weise ist vorgesehen, dass das Mittelteil eine Länge von mindestens einem, bevorzugt mindestens zwei, insbesondere mindestens drei Durchmessern der Stößelbohrung bzw. der Aufweitung zur Stößelbohrung aufweist. Dabei ist vorgesehen, dass das Mittelteil bevorzugt mindestens fünf oder mindestens 10, mindestens 20, mindestens 30, mindestens 50 oder mindestens 70 oder 80 Prozent der Dicke des Magnetkerns umfasst. Die Dicke des Magnetkerns ist dabei durch den Abstand des Ventilraums zum Ankerraum definiert, zwischen welchem sich der Magnetkern konstruktiv befindet. Dabei kann der Magnetkern auch eine Lagerungsfunktion für den Stößel übernehmen, alternativ ist der Stößel aber auch entweder im Anker selbst oder in der in dem Ventil vorgesehenen Baugruppe axial geführt. Der Vorzug der unterschiedlich möglichen Längen des Mittelteils, welches den Stößel schlauch- oder hülsenartig umgibt liegt darin, dass dadurch das erfindungsgemäß vorgeschlagene Abgrenzungselement an die jeweiligen Charakteristika des Elektromagneten anpassbar ist. So wird man bei einer hohen Beanspruchung des Elektromagneten, zum Beispiel aufgrund hoher Schaltzahlen und/oder hohen Hubes eher ein langes Mittelteil im Abgrenzungselement wählen.

Geschickter Weise erreicht der Vorschlag, dass durch eine Bewegung des Stößels das Material des Mitteilteils parallel zur Stößelbewegungsrichtung beansprucht, also mechanisch belastet, bzw. gelenkt wird. Eine Walk- oder Scharnierbewegung wird durch den Vorschlag vermieden, was zu entsprechender Erhöhung der Lebensdauer entscheidend beiträgt.

Durch Verlängerung des schlauchartigen Bereichs, zum Beispiel auf ein Mehrfaches (2-,3-,4-,5-,6-oder 7-fachen Stößeldurchmesser bzw. Stößelbohrungsdurchmesser, bzw. ein Anteil von mehr als 20% der Magnetkerndicke) können auch große Magnethübe, also große Hübe des Stößels bei gleicher prozentualer Dehnung, insbesondere des Mitteilteils des Abgrenzungselementes realisiert werden.

Bevorzugt wird eine homogene, gleichbleibende Wandstärke des Mittelteils eingesetzt, durch welche sich - in Umfangsrichtung gesehen - ein möglichst gleichartiges Verhalten des Abgrenzungselementes ergibt, welches die Lagerungs- und Führungselemente des Stößels in gleichartiger Weise belastet. Gleichzeitig trägt der homogene gleichbleibende Querschnitt auch zu einer homogenen gleichbleibenden Belastung des Mittelteils bei.

Bevorzugter Weise wird alternativ vorgesehen, dass der Querschnitt des Mittelteils in Längsrichtung gesehen homogen und gleichbleibend ist, wobei sich dieses Merkmal auf den entweder ungeschalteten oder geschalteten Zustand des Elektromagneten bezieht und nicht die Situation der Ausgleichsbewegung beschreibt. Im unbelasteten, nicht gelenkten Zustand des Abgrenzungselementes ist ein homogener gleichbleibender Querschnitt des Mittelteils wiederum günstig für eine gleichartige Belastung des Mittelteils und der daraus resultierenden Lebensdauer des gesamten nach der Erfindung vorgeschlagenen Elektromagneten.

Bevorzugter Weise ist der Befestigungsbereich als gegenüber dem Mittelteil nach innen vorstehender Ring, Wulst oder als Ringwulst ausgebildet. Der Anschlussbereich, der für einen dichten Anschluss des Abgrenzungselementes mit dem Magnetkern vorgesehen ist, ist als gegenüber dem Mittelteil nach außen vorstehender Flansch oder Ringflansch ausgebildet. Aufgrund gezielter Veränderungen der jeweiligen Materialstärken - sowohl in radialer als auch in axialer Richtung - wird erreicht, dass einerseits der Ringwulst, bzw. Ring, andererseits der Flansch, bzw. Ringflansch in geeigneter Weise an den damit korrespondierenden Elementen festlegbar ist und aufgrund der daraus resultierenden "steiferen" Ausgestaltung eine Längung oder Reckung des Abgrenzungselementes bei Bewegung des Stößels im Wesentlichen von dem Mittelteil geleistet wird, welches für diese Aufgabe wie beschrieben optimiert ist.

Gemäß dem Vorschlag ist eine Vielzahl verschiedener Verbindungsvarianten für eine dichte und mechanisch belastbare Verbindung einerseits des Anschlussbereiches mit dem Magnetkern andererseits des Befestigungsbereiches mit dem Stößel vorgesehen. Neben rein mechanisch wirkenden Verbindungstechniken, wie zum Beispiel einer Press- oder Klemmverbindung können aber auch stoffliche Verbindungstechniken wie eine Schweiß- oder Vulkanisierungsverbindung, aber auch eine Klebeverbindung, bei der auch eine zusätzliche Schicht für die Verbindung vorgesehen werden kann, eingesetzt werden. Durch die Anordnung eines Befestigungskragens oder einer Befestigungsnut am Stößel ist der Befestigungsort bei der Montage des Abgrenzungselementes genau definierbar. Gleichzeitig dient ein Befestigungskragen bzw. eine Befestigungsnut auch als Gegenlager zum Beispiel bei einer Press- oder Klemmverbindung.

Gleiches gilt bei der Verbindung des Anschlussbereiches in der Stößelbohrung bzw. einer an der Stößelbohrung auf der dem Ankerraum abgewandten Seite vorgesehenen Aufweitung, die der Aufnahme des Mittelteils dient. So ist zum Beispiel in der Stößelbohrung bzw. der Aufweitung ein Anschlusskragen oder eine Anschlussnut für die Befestigung des Anschlussbereiches vorgesehen.

Geschickter Weise wird das nach der Erfindung vorgesehene Abgrenzungselement einstückig hergestellt und besteht jeweils endseitig aus dem Befestigungsbereich und dem Anschlussbereich, welche zwischen sich das hülsen- oder schlauchartig ausgebildete Mittelteil aufnehmen. Grundsätzlich ist es im Rahmen der Erfindung vorgesehen, dass das Abgrenzungselement einen aus einem separaten Element gebildeten Befestigungsbereich und Abschlussbereich aufweist, welche zwischen sich den im Wesentlichen elastisch ausgebildeten Mittelteil aufweisen. In diesem Fall besteht das Abgrenzungselement zumindest teilweise aus elastischem Material. Insofern ist es nach der Erfindung ebenfalls vorgesehen, dass das Abgrenzungselement aus mehreren einzeln hergestellten Teilen besteht, die in geeigneter Weise hernach zusammengesetzt sind. Damit ist es grundsätzlich auch möglich, dass das Abgrenzungselement nicht nur aus homogenem gleichartigem Material besteht, sondern das Abgrenzungselement auf den jeweiligen Anwendungsbereich hin optimierte Materialeigenschaften aufweist und daher diesbezüglich heterogen ist.

Bevorzugter Weise ist das Abgrenzungselement aus einem Elastomer oder aus thermoplastischem Elastomer hergestellt. Dies können zum Beispiel folgende Materialien sein:
Hydrierter Acrylnitrilbutadien-Kautschuk (HNBR)
Acrylnitril-Butadien-Kautschuk (NBR)
Silikon-Kautschuk (VMQ)
Fluor-Silikon-Kautschuk (FVMQ)
Ethylen-Propylen-Dien-Kautschuk (EPDM)
Fluor-Polymer-Kautschuk (FPM, FKM)
Polytetrafluorethylen (PTFE)
Thermoplastische Elastomere (TPE)
Acrylkautschuk (ACM)
Chloropren-Kautschuk (CR)
Ethylen Acrylat Kautschuk (AEM)
Perfluorierter Kautschuk (FFKM)
Polyester-Urethan-Kautschuk (AU)
Styrol-Butadien-Kautschuk (SBR)
Naturkautschuk (NR)

In der Zeichnung ist die Erfindung insbesondere in einem Ausführungsbeispiel schematisch dargestellt. Es zeigen:
- Fig. 1a und Fig. 2a: je in einer Schnittdarstellung verschiedene Varianten des erfindungsgemäßen Elektromagneten
- Fig. 1b und Fig. 2b: Detailansichten der im Elektromagneten vorgesehenen Stößelbohrung.

In den Figuren sind gleiche oder einander entsprechende Elemente jeweils mit den gleichen Bezugszeichen bezeichnet und werden daher, sofern nicht zweckmäßig, nicht erneut beschrieben.

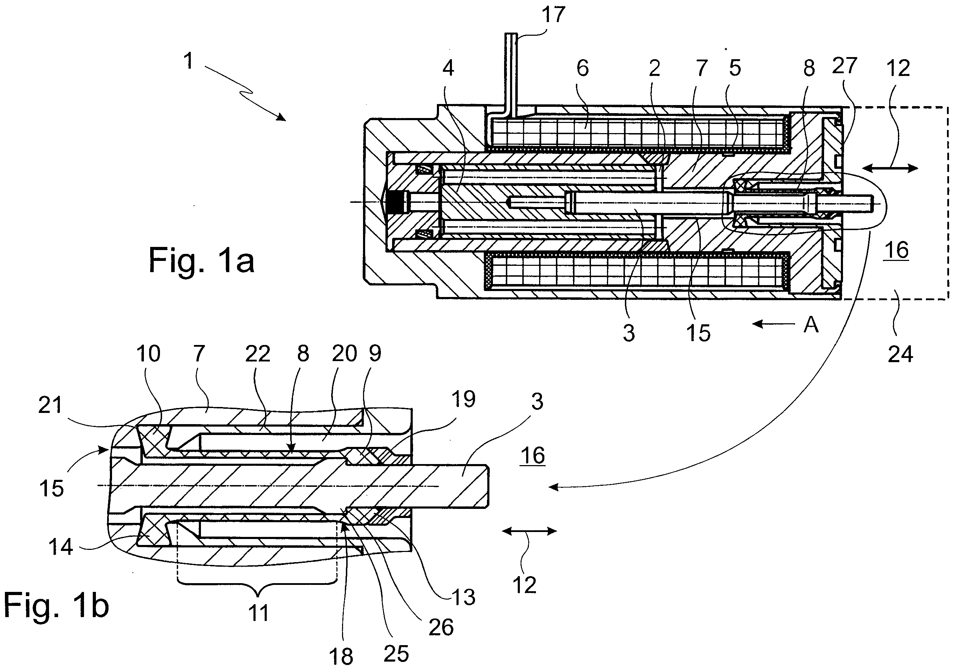

Der erfindungsgemäße Elektromagnet ist in den Figuren in verschiedenen Varianten schematisch dargestellt. Der in den Fig. 1a und 1b gezeigte Elektromagnet 1 dient insbesondere zur Steuerung eines Ventils 24. Der Elektromagnet 1 weist einen Ankerraum 2 auf, in dem ein beweglich gelagerter Anker 4 vorgesehen ist. Dieser Anker 4 wirkt auf einen mit dem Anker 4 fest bzw. schwimmend verbundenen Stößel 3. Der Ankerraum 2 ist umgeben von einer mit elektrischem Strom beaufschlagbaren Spule 5, die die Wicklungen eines Drahtes trägt, der von Strom durchflossen werden kann. Die Spule 5 erzeugt bei Betrieb des Elektromagneten ein entsprechendes Magnetfeld, das die Bewegung des Ankers 4 und damit des Stößels 3 bewirkt. Entsprechend dem erzeugten Magnetfeld wird der Anker 3 axial versetzt, wodurch dann die Betätigung, das heißt, in der einfachsten Ausführung, ein Öffnen oder Schließen des Ventils 24 erfolgt. An den Ankerraum 2 schließt sich der Magnetkern 7 an und begrenzt diesen in Richtung des dem Elektromagneten 1 zugeordneten Ventils 24. Der Magnetkern 7 weist eine Stößelbohrung 15 auf, die den axial bewegbaren Stößel 3 aufnimmt.

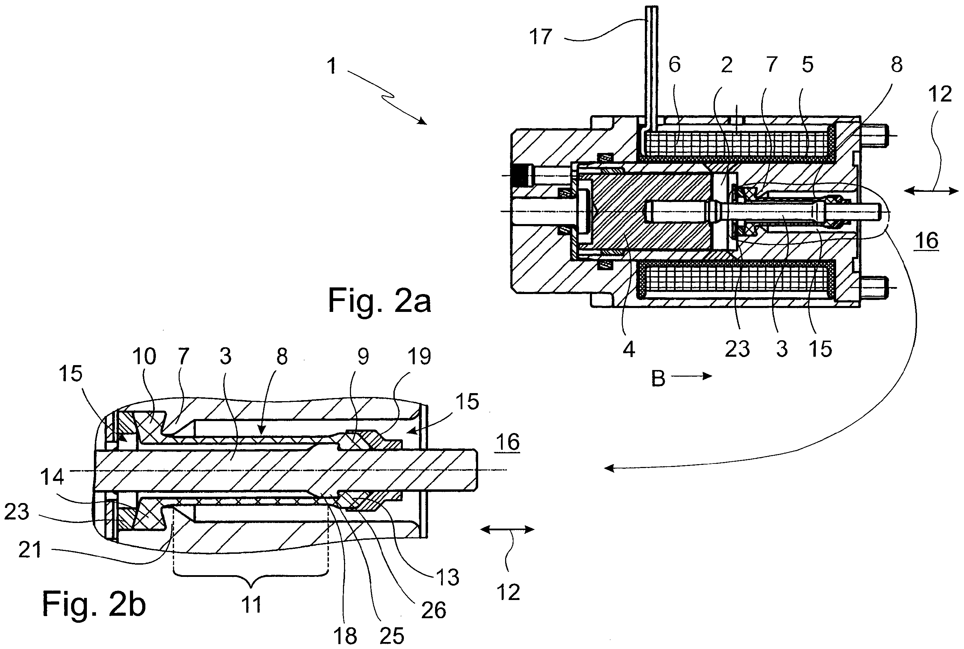

Der in den Fig. 1a und 2a in jeweils bevorzugten Ausführungsformen dargestellte Elektromagnet 1 dient zur Steuerung eines Ventils 24. Ein derartiges Ventil 24 kann beispielsweise dazu verwendet werden, aggressive oder korrosive Medien zu steuern. Um zu vermeiden, dass die durch das Ventil 24 gesteuerten Medien in den Elektromagneten 1 und hierbei insbesondere in den Ankerraum 2 eindringen und hier Verunreinigungen oder Korrosion verursachen, ist ein Abgrenzungselement 8 vorgesehen. Dieses Abgrenzungselement 8 ist aus einem elastischen Material gebildet und erstreckt sich axial zum Stößel 3 in der Stößelbohrung 15. Über das Abgrenzungselement 8 kann ein flüssigkeitsdichter Abschluss des Ankerraumes 2 gegenüber dem durch den Elektromagneten 1 betätigten Ventil 24 erreicht werden. Das Abgrenzungselement 8 umgibt den mit dem Ventil 24 unmittelbar in Wirkverbindung stehenden Teil des Stößels 3 nach Art einer Hülse oder eines Schlauches. Aufgrund der elastischen Ausführung des Abgrenzungselementes kann dieses durch Bewegung des Stößels in Stößelbewegrichtung 12 gedehnt bzw. komprimiert werden und dabei dauerhaft eine Abdichtung gewährleisten. In den Fig. 1a und 2a ist der mit dem Ventil 24 unmittelbar in Wirkverbindung stehende Teil des Stößels 3 sowie das diesen umgebende Abgrenzungselement 8 dargestellt. Das Abgrenzungselement 8 umgibt den Stößel schlauch- oder hülsenartig. Das Befestigungselement 8 weist zum einen einen mit dem Stößel 3 in Verbindung stehenden, insbesondere flüssigkeitsdicht an diesem anliegenden Befestigungsbereich 9 auf. Zum anderen ist am Abgrenzungselement 8 ein Anschlussbereich 10 vorgesehen, der mit dem Magnetkern 7 verbunden ist. Hier ist eine flüssigkeitsdichte Verbindung von Abgrenzungselement 8 und Anker 7 vorgesehen.

Am Stößel ist ein radialer Vorsprung 25 vorgesehen, der eine Schulter 26 ausbildet, die mit dem Befestigungsbereich 9 in Eingriff steht. Der Befestigungsbereich 9 ist im Ausführungsbeispiel der Fig. 1b und 2b als wulstartige Verdickung des Abgrenzungselementes 9 ausgebildet. Diese erstreckt sich gegenüber dem Mittelteil 11 des Abgrenzungselementes radial auf den Stößel 3 zu. Um eine Sicherung des Befestigungsbereiches 9 zu gewährleisten, und um zu verhindern, dass sich der Befestigungsbereich 9 von dem radialen Vorsprung 25 löst, ist ein Klemmring 19 vorgesehen. Dieser wird nach dem Anordnen des Abgrenzungselementes 8 im Magnetkern 7 und nach bzw. bei Einführen des Stößels 8 in das Abgrenzungselement 8 auf den Stößel 3 aufgesteckt und sichert das Abgrenzungselement bzw. den Befestigungsbereich 9 gegen ein unbeabsichtigtes Abrutschen vom Stößel 9.

Der radiale Vorsprung 25 erstreckt sich axial zur Stößelbewegungsrichtung in Richtung des Ankers 4 und bildet dabei einen umlaufenden Befestigungskragen 18 aus, an dem ein Teil des Abgrenzungselementes 8 eng anliegt. Der Befestigungskragen weist im weiteren Verlauf eine Abschrägung auf, die auf eine Verjüngung des Durchmessers der Stößels 3 zuläuft. Das den Magnetkern überragende Ende des Stößels 3 erstreckt sich in ein sich an den Elektromagneten 1 in Stößelbewegrichtung 12 anschließendes Ventil 24 hinein und betätigt dieses. Der Stößel 3 ist durch die Stößelbohrung 15 im Magnetkern 7 hindurchgeführt und steht dort mit dem Anker 4 in Verbindung (vgl. Fig. la und 2a).

In den wesentlichen Funktionsteilen entsprechen sich die in den Fig. 1a und 2a dargestellten Elektromagnete 1. Beide verfügen über ein seitlich am Magnetgehäuse angeordnetes Kabel 17, über das die Spule 6 mit Strom versorgt wird. Auch im übrigen entsprechen beide in ihrer Funktionsweise bekannten Elektromagneten. Die in den Fig. 1a und 2b dargestellten Elektromagnete 1 unterscheiden sich jedoch in der Art und Weise der Montage des Abgrenzungselementes 8 beziehungsweise des Magnetkerns 7. Bei der Ausführungsform, wie in Fig. la dargestellt wird zunächst ein Elektromagnet 1 zur Verfügung gestellt, bei dem der Magnetkern 7 bereits in der in der Fig. la dargestellten Position eingesetzt ist. Auch der Stößel 3 befindet sich hierbei bereits in der Stößelbohrung 15 und überragt den Magnetkern 7 beziehungsweise die darin vorgesehene Stößelbohrung 15. In einem Montageschritt wird das Abgrenzungselement 8 auf den Stößel 3 aufgeschoben und in den Magnetkern 7 eingebracht. Zur Sicherung des am Magnetkern 7 anliegenden Anschlusskragens 21 wird dann eine Abdeckplatte 27 auf den Magnetkern 7 aufgesetzt. Diese Abdeckplatte weist eine als Klemmhülse 22 ausgebildete, hülsenartige Verlängerung auf, die in die Stößelbohrung 15 einsteht und an dem Anschlusskragen 21 anliegt. Hierdurch wird nach Verbindung der Abdeckplatte 27 eine Klemmsicherung für das Abgrenzungselement 8 in der Stößelbohrung 15 beziehungsweise am Magnetkern 7 geschaffen. Das Abgrenzungselement 8, beziehungsweise dessen Mittelteil 11 erstreckt sich am die Stößelbohrung 15 überragenden Abschnitt des Stößels 3 entlang parallel zu diesem und findet ihren Abschluss in dem wulstartig ausgebildeten Ring 13, der mit dem Befestigungskragen 18 beziehungsweise dem radialen Vorsprung 25 in Eingriff steht und ein Abrutschen des Abgrenzungselementes 8 vom Stößel verhindert. Eine zusätzliche Sicherung wird durch den Klemmring 19 geschaffen, der ebenfalls auf den Stößel 3 aufgesteckt wird und den Ring 13 am Stößel 3 festlegt beziehungsweise mit diesem verpresst oder verklemmt.

Im Gegensatz hierzu wird die Montage in dem in Fig. 2a dargestellten Elektromagneten 1 derart durchgeführt, dass ein Bauteil, bestehend aus dem Stößel 3 mit angesetztem Abgrenzungselement 8, zur Verfügung gestellt wird. Dieses wird durch die Stößelbohrung 15 in den Magnetkern 7 eingesetzt und danach durch die Klemmscheibe 23 gesichert. Im Magnetkern 7 ist zu diesem Zweck ein Anschlusskragen 21 vorgesehen, auf dem der Flansch 14, der am Abgrenzungselement 8 angeordnet ist und dessen Anschlussbereich 10 mit ausbildet, aufliegt. Eine zusätzliche Sicherung wird hier durch das Aufsetzen der Klemmscheibe 23 erreicht. Diese verhindert ein Abrutschen des Anschlussbereiches 10 vom Anschlusskragen 21. Am Stößel 3 selbst erstreckt sich der Mittelteil 11 des Abgrenzungselementes 8 koaxial zu diesem am Stößel 3 entlang und übergreift den am Stößel 3 vorgesehenen Befestigungskragen 18, der ebenfalls mit einem radialen Vorsprung 25 und einer Schulter 26 ausgebildet ist, mit denen der Ring 13 beziehungsweise der Befestigungsbereich 9 des Abgrenzungselementes 8 in Eingriff steht. Stößelseitig wird das Abgrenzungselement 8 durch einen im Zusammenhang mit Fig. 1b bereits beschriebenen Klemmring 19 gesichert. In diesem Ausführungsbeispiel ist keine Klemmhülse 22, wie im Zusammenhang mit Fig. 1b gezeigt, vorgesehen und notwendig, um eine Sicherung des Abgrenzungselementes 8 durchzuführen. Eine Montage des Abgrenzungselementes 8 erfolgt hierbei in Richtung des Pfeiles B, während im Ausführungsbeispiel der Fig. 1 eine Montage in Richtung des Pfeiles A erfolgt.

Fig. 1b und 2b zeigen Detailansichten des Abgrenzungselementes 8, das in die Stößelbohrung 15 eingesetzt wurde. Das Abgrenzungselement 8 ist in den beiden dargestellten Ausführungsbeispielen über eine Klemmverbindung mit dem Stößel 3 verbunden. Ebenfalls eine Klemmverbindung ist zwischen Magnetkern 7 und dem Anschlussbereich 10 des Abgrenzungselementes 8 vorgesehen.

Das Abgrenzungselement 8 zeigt, neben dem Anschlussbereich 10, der mit dem Magnetkern 7 in Eingriff steht, und dem Befestigungsbereich 9, der am Stößel 3 anliegt beziehungsweise mit diesem in Eingriff steht, einen Mittelteil 11. Der Mittelteil 11 ist im wesentlichen parallel beziehungsweise koaxial zum Stößel 3 angeordnet. Um eine ausreichende Abdichtleistung zur Verfügung zu stellen und um ausreichend Raum für eine Dehnung des Mittelteiles 11 beziehungsweise für eine entsprechende Vergrößerung des fluid-durchströmbaren Bereiches der Stößelbohrung 15 zu schaffen, weist der Mittelteil 11 eine Länge von drei Stößeldurchmessern auf. Bei einer Bewegung des Stößels 3 in Stößel-Bewegrichtung 12 kommt es zu einer Dehnung des aus elastischem Material gefertigten Abgrenzungselements 8. Gleichzeitig kommt es durch die Längung des Abgrenzungselementes 8 zu einer radialen Durchmesserverringerung. Hierdurch bewegt sich das Abgrenzungselement 8 beziehungsweise dessen Mittelteil 11 in Richtung des Stößels 3. Von der Ausgestaltung des Abgrenzungselementes 8 als Hülse beziehungsweise Schlauch oder Schlauchabschnitt, kommt es zu einer gleichmäßigen Durchmesserverringerung. Die Wandstärke verringert sich somit über das gesamte Mittelteil 11 hinweg in gleichem Maße, wenn es zu einer Dehnung des Abgrenzungselementes 8 kommt. Gleichzeitig wird durch die radiale Durchmesserverringerung des Abgrenzungselementes 8 der für das einfließende Medium zur Verfügung stehende Raum in der Stößelbohrung 15 vergrößert.

Beim Bewegen des Stößels 3 in entgegengesetzter Richtung kommt es zu einer Verkürzung des Abgrenzungselementes 8 und zu einem Zurückweichen vom Stößel 3, das heißt, zu einer radialen Erweiterung des Durchmessers des Abgrenzungselementes 8. Hierdurch wird zusätzlich das in der Stößelbohrung 15 eingedrungene Fluid aus dieser herausgedrückt.

Das Abgrenzungselement 8 weist einen im Ausführungsbeispiel wulst- oder ringartigen Befestigungsbereich 9 auf. Dieser ist gegenüber dem Mittelteil 11 radial nach innen vorstehend, das heißt, er erstreckt sich radial in Richtung des Stößels 3. Der Anschlussbereich 10 des Abgrenzungselementes 8 liegt an dem dem Befestigungsbereich 9 gegenüber liegenden Ende des Mittelteils 11 und ist als gegenüber dem Mittelteil 11 radial nach außen vorstehender Flansch 14 ausgebildet. Der Flansch 14 ist dabei ringförmig um das Mittelteil 11 angeordnet und weist eine mit dem Anschlusskragen 21 korrespondierende Formgebung auf, so dass hier ein teilweises Hintergreifen des Flansches 14 durch den Anschlusskragen 21 stattfindet. Zum Einsetzen des Abgrenzungselementes 8 wird dieses in der in Fig. 1b gezeigten Ausführungsform von unten her, das heißt in Pfeilrichtung A (vgl. Fig. la), in den Magnetkern 7 eingeschoben.

Im Gegensatz hierzu wird bei dem in Fig. 2b dargestellten Ausführungsbeispiel die Baugruppe, bestehend aus Stößel 3 mit daran angeordnetem Abgrenzungselement 8, von der Ankerseite her in Richtung des Pfeiles B (vgl. Fig. 2a) in den Magnetkern 7 eingeschoben und danach durch die Klemmscheibe 23 gesichert. Die in Fig. 2b gezeigte Ausführungsform bietet den Vorteil, dass hier die Baugruppe, bestehend aus Anker 4, Stößel 3 und Abgrenzungselement 8, als ein Bauteil zur Verfügung gestellt werden kann, das nur noch in den Magnetkern 7 beziehungsweise die Baugruppe, die den Magnetkern 7 beinhaltet, eingeschoben werden muss.

Um in der in Fig. 1a gezeigten Ausführungsform eine Sicherung des Abgrenzungselementes 8 und eine fluiddichte Anordnung des Abgrenzungselementes 8 in der Stößelbohrung 15 beziehungsweise im Magnetanker 7 zu erreichen, wird hier eine zusätzliche Abdeckplatte 27 vorgesehen, die eine Klemmhülse 22 umfasst, die mit dem Anschlussbereich 10 des Abgrenzungselementes 8 in Eingriff gebracht wird und das Abgrenzungselement 8 in der Stößelbohrung 15 beziehungsweise im Magnetkern 7 gegen unbeabsichtigtes Herausfallen sichert. Gleichzeitig wird hierdurch die fluiddichte Abdichtung sichergestellt. Die Abdeckplatte 27 wird im Magnetkern 7 zusätzlich gesichert, beispielsweise über eine Klemm-, Rast-, Schraub- oder sonstige als geeignet erscheinende Verbindung.

Das Abgrenzungselement 8 ist im Ausführungsbeispiel aus einem Elastomer gebildet und derart ausgelegt, dass eine hohe Anzahl von Schaltvorgängen durchgeführt werden kann, ohne dass Ermüdungs- oder Versprödungserscheinungen am Abgrenzungselement 8 auftreten. Gleichzeitig ist das Elastomer-Material resistent gegen aggressive oder korrosive Medien, die mit dem sich an dem Elektromagneten 1 anschließenden Ventil 24 gesteuert werden.

Neben den in Fig. 1b und 2b dargestellten Möglichkeiten der Anordnung des Abgrenzungselementes 8 beziehungsweise des Eingriffes des Befestigungsbereiches 9 über einen am Stößel 3 vorgesehenen Befestigungskragen 18 besteht auch die Möglichkeit, dass hier eine Nut vorgesehen ist, in die der aufgeweitete Ring des Befestigungsbereiches 9 eingreift. Darüber hinaus sind alle weiteren, dem Fachmann geläufigen Befestigungsarten gleichfalls hier realisierbar.

In den Fig. 1a und 2a sowie den Fig. 1b und 2b wird der Elektromagnet 1 in der Grundstellung dargestellt, das heißt, dass Abgrenzungselement 8 ist nicht gedehnt beziehungsweise gelängt. Wird der Elektromagnet 1 bestromt, kommt es zu einer Verschiebung des Ankers 4 im Ankerraum 2. Hierdurch wird der Stößel 3 weiter in die Stößelbohrung 15 hineingeführt und überragt das Magnetgehäuse weiter als in den Fig. gezeigt. Hierdurch kommt es, aufgrund dessen, dass das Abgrenzungselement 8 im Magnetkern 7 festgelegt ist, zu dessen Dehnung beziehungsweise Längung. Es kommt somit zu einer Beanspruchung des Abgrenzungselementes 8 in Längsrichtung. Es findet hierbei jedoch keine Beanspruchung in einer hierzu senkrechten oder im wesentlichen senkrechten Bewegung statt, so dass hier keine Doppelbeaufschlagung des Elastomer-Materiales erfolgt. Dies trägt zur Langlebigkeit des Abgrenzungselementes 8 und damit zu einer erhöhten Betriebsdauer des gesamten Elektromagneten 1 bei. Zusätzlich wird die Montage des Magneten vereinfacht, da das Abgrenzungselement 8 als Formteil zur Verfügung gestellt wird, das in einfacher Art und Weise in die Stößelbohrung 15 eingeführt beziehungsweise eingesetzt werden kann.

Die jetzt mit der Anmeldung und später eingereichten Ansprüche sind ohne Präjudiz für die Erzielung weitergehenden Schutzes.

Sollte sich hier bei näherer Prüfung, insbesondere auch des einschlägigen Standes der Technik, ergeben, dass das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist. Auch eine solche Unterkombination ist von der Offenbarung dieser Anmeldung abgedeckt.

Es ist weiter zu beachten, dass die in den verschiedenen Ausführungsformen beschriebenen und in den Figuren gezeigten Ausgestaltungen und Varianten der Erfindung beliebig untereinander kombinierbar sind. Dabei sind einzelne oder mehrere Merkmale beliebig gegeneinander austauschbar. Diese Merkmalskombinationen sind ebenso mit offenbart.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die nur in der Beschreibung offenbart wurden, oder auch Einzelmerkmale aus Ansprüchen, die eine Mehrzahl von Merkmalen umfassen, können jederzeit als von erfindungswesentlicher Bedeutung zur Abgrenzung vom Stande der Technik in den oder die unabhängigen Anspruch/Ansprüche übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

## Patentansprüche

1. Elektromagnet, insbesondere für mediensteuernde Ventile, bei welchem in einem Ankerraum ein beweglich gelagerter, auf einen Stößel wirkender Anker und eine Wicklungen eines stromdurchfließbaren Drahtes tragende Spule vorgesehen ist und der den Ankerraum begrenzende Magnetkern eine Stößelbohrung aufweist, welche den axial bewegbaren Stößel aufnimmt und ein, aus zumindest teilweise elastischem Material bestehendes, medien- beziehungsweise flüssigkeitsdichtes Abgrenzungselement zwischen dem Stößel und dem Magnetkern vorhanden ist, **dadurch gekennzeichnet, dass** das Abgrenzungselement (8) einen Befestigungsbereich (9) für eine dichte Verbindung des Abgrenzungselementes (8) mit dem Stößel (3), einen Anschlussbereich (10) für einen dichten Anschluss des Abgrenzungselementes (8) mit dem Magnetkern (7) und ein zwischen dem Befestigungsbereich (9) und dem Anschlussbereich (10) vorgesehenes Mittelteil (11) umfasst, und das Mittelteil (11) zumindest eine Teillänge des Stößels (3) schlauch- oder hülsenartig umgibt.

2. Elektromagnet nach Anspruch 1, **dadurch gekennzeichnet, dass** das Mittelteil (11) im Wesentlichen parallel beziehungsweise koaxial zum Stößel (3) angeordnet ist.

3. Elektromagnet nach Anspruch 1 oder 2, **dadurch gekennzeichnet, dass** das Mittelteil eine Länge von mindestens einem, bevorzugt mindestens zwei, insbesondere mindestens drei Stößeldurchmessern aufweist.

4. Elektromagnet nach einem der vorhergehenden Ansprüche, **dadurch gekennzeichnet, dass** bei einer Bewegung des Stößels (3) das Mittelteil (11) im Wesentlichen parallel zur Stößelbewegungsrichtung (12) beansprucht beziehungsweise gelängt wird.

5. Elektromagnet nach einem der vorhergehenden Ansprüche, **gekennzeichnet durch** eine homogene, gleichbleibende Wandstärke des Mittelteiles (11).

6. Elektromagnet nach einem der vorhergehenden Ansprüche, **gekennzeichnet durch** einen in Längsrichtung gesehenen homogenen, gleichbleibenden Querschnitt des Mittelteiles (11) .

7. Elektromagnet nach einem der vorhergehenden Ansprüche, **dadurch gekennzeichnet, dass** der Befestigungsbereich (9) als gegenüber dem Mittelteil (11), nach innen vorstehender Ring (13) oder Wulst oder Ringwulst ausgebildet ist.

8. Elektromagnet nach einem der vorhergehenden Ansprüche, **dadurch gekennzeichnet, dass** der Anschlussbereich (10) als gegenüber dem Mittelteil (11) nach außen vorstehender Flansch (14) oder Ringflansch ausgebildet ist.

9. Elektromagnet nach einem der vorhergehenden Ansprüche, **dadurch gekennzeichnet, dass** der Ankerraum (2) mit einer Ankerraumflüssigkeit befüllbar ist.

10. Elektromagnet nach einem der vorhergehenden Ansprüche, **gekennzeichnet durch** eine Press-, Klemm-, Vulkanisierungs-, Klebe- oder Schweißverbindung für das Befestigen des Befestigungsbereiches (9) mit dem Stößel (3) beziehungsweise des Anschlussbereiches (10) mit dem Magnetkern (7).

11. Elektromagnet nach einem der vorhergehenden Ansprüche, **dadurch gekennzeichnet, dass** der Stößel (3) einen Befestigungskragen (18) oder eine Befestigungsnut für die Befestigung des Befestigungsbereiches (9) aufweist.

12. Elektromagnet nach einem der vorhergehenden Ansprüche, **dadurch gekennzeichnet, dass** die Stößelbohrung (15) auf der dem Ankerraum (2) abgewandten Seite eine Aufweitung (20) zur Aufnahme des Mittelteiles (11) aufweist.

13. Elektromagnet nach einem der vorhergehenden Ansprüche, **dadurch gekennzeichnet, dass** in der Stößelbohrung (15) bzw. der Aufweitung (20) ein Anschlusskragen (21) oder eine Anschlussnut für die Befestigung des Anschlussbereiches (10) vorgesehen ist.

14. Elektromagnet nach einem der vorhergehenden Ansprüche, **dadurch gekennzeichnet, dass** das Abgrenzungselement (8) aus einem Elastomer oder einem thermoplastischen Elastomer, insbesondere zum Beispiel aus Silikon, Kunstkautschuk, Fluorsilikonkautschuk oder Ähnlichem besteht.

## Claims

1. Electromagnet, in particular for media-controlling valves, where in an armature space a movably mounted armature acting on a tappet and a coil carrying windings of a wire that can be flown through by electricity are provided, and the magnetic core delimiting the armature space has a tappet bore hole that receives the axially movable tappet, and a media- or liquidproof delimiting element consisting of at least partly elastic material is located between the tappet and the magnetic core, **characterized in that** the delimiting element (8) comprises a mounting area (9) for a tight connection of the delimitating element (8) with the tappet (3), a connection area (10) for a tight connection of the delimitating element (8) with the magnetic core (7), and a middle part (11) provided between the mounting area (9) and the connection area (10), and the middle part (11) surrounds at least part of the length of the tappet (3) hose- or sleeve-like.

2. Electromagnet according to claim 1, **characterized in that** the middle part (11) is arranged essentially parallel or coaxially to the tappet (3).

3. Electromagnet according to either claim 1 or 2, **characterized in that** the middle part has a length of at least one, preferably at least two, in particular at least three tappet diameters.

4. Electromagnet according to one of the preceding claims, **characterized in that** while the tappet (3) moves the middle part (11) is strained or lengthened essentially parallel to the direction of movement of the tappet (12).

5. Electromagnet according to one of the preceding claims, **characterized by** a homogenous, constant wall thickness of the middle part (11).

6. Electromagnet according to one of the preceding claims, **characterized by** a cross section of the middle part (11) that is homogenous and constant seen in longitudinal direction.

7. Electromagnet according to one of the preceding claims, **characterized in that** the mounting area (9) is configured as a ring (13) or bead or bead ring projecting inward with respect to the middle part (11).

8. Electromagnet according to one of the preceding claims, **characterized in that** the connection area (10) is configured as flange (14) or annular flange projecting outwards with respect to the middle part (11).

9. Electromagnet according to one of the preceding claims, **characterized in that** the armature space (2) can be filled with an armature space liquid.

10. Electromagnet according to one of the preceding claims, **characterized by** a press, clamp, vulcanizing, glue or weld connection for mounting the mounting area (9) to the tappet (3) or the connection area (10) to the magnetic core (7).

11. Electromagnet according to one of the preceding claims, **characterized in that** the tappet (3) has a mounting collar (18) or mounting groove for mounting the mounting area (9).

12. Electromagnet according to one of the preceding claims, **characterized in that** the tappet bore hole (15) has a widening (20) for receiving the middle part (11) on the side opposite the armature space (2).

13. Electromagnet according to one of the preceding claims, **characterized in that** in the tappet bore hole (15) or the widening (20) a connection collar (21) or a connection groove is provided for mounting the connection area (10).

14. Electromagnet according to one of the preceding claims, **characterized in that** the delimiting element (8) consists of an elastomer or a thermoplastic elastomer, in particular for example silicone, artificial caoutchouc, fluorine silicone caoutchouc or the like.

## Revendications

1. Electroaimant, en particulier destiné à des vannes de contrôle de flux, configuré avec un induit maintenu de façon mobile à l'intérieur d'un espace d'induit et agissant sur un poussoir, avec une bobine portant un enroulement de fil parcouru par un courant électrique, avec un noyau magnétique délimitant l'espace d'induit et comportant un perçage pour le poussoir recevant le poussoir mobile selon la direction axiale et avec un élément de délimitation fabriqué en un matériau au moins partiellement élastique et étanche aux liquides situé entre le poussoir et le noyau magnétique, **caractérisé en ce que** l'élément de délimitation (8) possède une zone de fixation (9) pour un lien étanche entre l'élément de délimitation (8) et le poussoir (3), une zone de raccord (10) pour un raccordement étanche de l'élément de délimitation (8) et du noyau magnétique (7) et une pièce intermédiaire (11) située entre la zone de fixation (9) et la zone de raccord (10)de façon à ce que la pièce intermédiaire (11) renferme au moins partiellement une partie de la longueur du poussoir (3) comme une gaine ou une douille.

2. Electroaimant selon la revendication 1, **caractérisé en ce que** la pièce intermédiaire (11) est orientée de façon essentiellement parallèle ou coaxiale par rapport au poussoir (3).

3. Electroaimant selon les revendications 1 ou 2, **caractérisé en ce que** la pièce intermédiaire possède une longueur d'au moins un, de préférence au moins deux et en particulier au moins trois diamètres du poussoir.

4. Electroaimant selon une des revendications précédentes, **caractérisé en ce que** la pièce intermédiaire (11) est soumise à un effort mécanique et est allongée essentiellement selon une direction parallèle à la direction de mouvement (12) du poussoir lors du déplacement du poussoir (3).

5. Electroaimant selon une des revendications précédentes, **caractérisé par une** épaisseur homogène, constante de la paroi de la pièce intermédiaire (11).

6. Electroaimant selon une des revendications précédentes, **caractérisé par une** section homogène, constante, vue en direction longitudinale de la pièce intermédiaire (11).

7. Electroaimant selon une des revendications précédentes, **caractérisé en ce que** la zone de fixation (9) est configurée par rapport à la pièce intermédiaire (11) comme un anneau (13), une boursoufflure sous forme annulaire débordant vers l'intérieur.

8. Electroaimant selon une des revendications précédentes, **caractérisé en ce que** la zone de raccord (10) est configurée par rapport à la pièce intermédiaire (11) comme une bride (14) ou bride annulaire débordant vers l'extérieur.

9. Electroaimant selon une des revendications précédentes, **caractérisé en ce que** l'espace d'induit (2) peut être rempli par un liquide approprié.

10. Electroaimant selon une des revendications précédentes, **caractérisé par un** raccord par emmanchement, par serrage, par vulcanisation, par collage ou par soudage entre la zone de fixation (9) et le poussoir (3) ou entre la zone de raccord (10) et le noyau magnétique (7).

11. Electroaimantselon une des revendications précédentes, **caractérisé en ce que** le poussoir (3) possède un collier de fixation (18) ou une gorge de fixation pour la fixation de la zone de fixation (9).

12. Electroaimant selon une des revendications précédentes, **caractérisé en ce que** le perçage du poussoir (15) possède au niveau de l'extrémité opposée de l'espace d'induit (2) un élargissement (20) permettant de recevoir la pièce intermédiaire (11).

13. Electroaimant selon une des revendications précédentes, **caractérisé en ce qu'un** collier de raccord (21) ou une gorge de raccord est prévu(e) à l'intérieur du perçage de poussoir (15) ou de l'élargissement (20) permettant de fixer la zone de raccord (10).

14. Electroaimant selon une des revendications précédentes, **caractérisé en ce que** l'élément de délimitation (8) consiste en un matériau élastomère ou en un élastomère thermoplastique, en particulier par exemple en silicone, en caoutchouc synthétique, en caoutchouc fluoré silicone ou en un matériau similaire.
